# EUROPÄISCHE PATENTSCHRIFT

(11) **EP 1 920 878 B1**
(45) Veröffentlichungstag und Bekanntmachung des Hinweises auf die Patenterteilung: **03.12.2008**
(21) Anmeldenummer: 07020558.8
(22) Anmeldetag: 31.10.2007
(51) Int. Cl.: B23Q 1/66, B23Q 11/08, B23Q 1/76

(54) **Werkzeugmaschine für manuelle Beladung**
Machine tool for manual setting
Machine-outil pour chargement manuel

(30) Priorität: 08.11.2006 DE 102006052933
(43) Veröffentlichungstag der Anmeldung: 14.05.2008
(73) Patentinhaber: Schwäbische Werkzeugmaschinen GmbH, 78713 Schramberg-Waldmössingen (DE)
(72) Erfinder: Armleder, Wolfgang, 78628 Rottweil (DE); Eger, Martin, 78727 Oberndorf a.N. (DE)

(56) Entgegenhaltungen:
- DE-A1- 19 736 252
- DE-A1- 19 907 617
- US-A- 5 181 898
- US-A- 5 658 476

## Beschreibung

Die Erfindung betrifft eine Werkzeugmaschine mit einem im Maschinengestell um eine horizontale Achse schwenkbar gelagerten Werkstückträger. Durch eine Schwenkbewegung werden die Werkstücke aus einer Be- und Entladeposition in eine Bearbeitungsposition geschwenkt. Das manuelle Be- und Entladen kann hauptzeitparallel, also während der Bearbeitung der Werkstücke erfolgen.

Aus der DE 35 05 138 C2 ist eine Werkzeugmaschine bekannt, wobei mindestens zwei Prismenpaletten zur Halterung von Werkstücken vorgesehen sind. Diese sind durch eine horizontale Schwenkbewegung gegeneinander austauschbar. Dabei wird die im Arbeitsraum befindliche Palette in die Montagestation und die dort befindliche in den Arbeitsraum überführt. Außerdem sind die Paletten jeweils um ihre eigene Achse schwenkbar, damit die Werkstücke aus unterschiedlichen Winkeln bearbeitet werden können. Die Montagestation ist zum Schutz vor Spänen und Kühlflüssigkeit mit einer Platte vom Arbeitsraum abgetrennt. Die DE 199 07 617 C2 zeigt eine Werkzeugmaschine mit einem Doppelschwenktisch. Deren beide Schwenktische sind zwischen zwei Schwenkscheiben gelagert. Die Schwenkscheiben sind seitlich am Maschinengestell um eine horizontale Achse drehbar aufgenommen. Durch eine 180°- Schwenkung des Doppelschwenktisches um die horizontale Achse gelangen die Schwenktische von der Bestückungsseite zur Bearbeitungsseite und umgekehrt. Um die Werkstücke aus unterschiedlichen Winkeln bearbeiten zu können sind die Schwenktische jeweils um zusätzliche Schwenkachsen drehbar. Insgesamt sind also drei Schwenkachsen vorgesehen. Zwischen den beiden Schwenktischen ist eine Spritzschutzwand angeordnet. Diese deckt die Bearbeitungsseite vollständig ab. Um dem Bedienpersonal den Zugang zur Bearbeitungsseite zu ermöglichen, sind an der Spritzschutzwand Wandöffnungen mit Schiebetüren vorgesehen. Eine Abdichtung gegenüber den Schwenktischen ist nicht erforderlich. Die US-A-5 658 476 betrifft eine Laserbearbeitungszelle zur Schweiß- oder Schneidbehandlung von Werkstücken. Zum Schutz des Personals gegen austretende Laserstrahlung ist die Bearbeitungszelle von einem Gehäuse umgeben. Die Beladung mit Werkstücken erfolgt durch eine Öffnung im Gehäuse über eine schwenkbare Positioniereinrichtung. Die Positioniereinrichtung ist mit ihren drei Schwenkachsen ähnlich aufgebaut wie die Werkstückzuführung nach DE 199 07 617 C2. Sie weist einen um eine horizontale Achse schwenkbaren Rahmen mit zwei drehbaren Werkstückhaltern auf.

Zwischen den beiden Werkstückhaltern sind zwei Schutzschilde angebracht. Diese sind fest mit dem Rahmen verbunden. Zum Austausch eines fertig bearbeiteten Werkstücks im Arbeitsraum gegen ein unbearbeitetes aus der Ladestation wird der Rahmen um 180° geschwenkt, wobei auch die Schutzschilde der Schwenkbewegung zwangsläufig folgen. Zum Abdichten der Schutzschilde gegenüber dem Gehäuse sind in der Öffnung bewegliche Zargen vorgesehen, an welchen die Schutzschilde, abhängig von der jeweiligen Schwenkstellung des Rahmens, wechselweise auf der Vorder- oder Rückseite anschlagen. Dabei werden zwischen Rahmen, Zargen und Gehäuse vorhandene Spalte oder Lücken mit flexiblen Klappen abegdeckt. Diese Art der Dichtung verhindert zuverlässig das Austreten der Laserstrahlung aus dem Arbeitsraum, ist jedoch zum Abdichten gegen den Austritt von Kühlflüssigkeit nicht geeignet.

Es ist die Aufgabe der Erfindung, eine Werkzeugmaschine der gattungsgemäßen Art mit einem kostengünstigen Beladesystem einfacher zu gestalten. Diese Aufgabe wird gelöst durch eine Vorrichtung nach Patentanspruch 1.

Ein vorteilhafter Aspekt der Erfindung besteht darin, die Schwenkachse des Werkstückträgers ortsfest am Maschinengestell anzuordnen. Zur manuellen Beladung ist eine Be- und Entladeposition vorgesehen, welche durch eine Abschirmung vor Spänen und Kühlflüssigkeit geschützt ist. Die Abschirmung liegt unmittelbar an einer Dichtfläche am Werkstückträger an. Ein Werkstückträger, der beispielsweise an vier, jeweils paarweise gegenüberliegenden Seiten Werkstücke aufnimmt, ist an jeder der vier Seiten mit einer Dichtfläche versehen. Zum Austausch der Werkstücke wird der Werkstückträger jeweils um einen Schwenkwinkel von 90° gedreht. Für den Fall, dass zur Werkstückbearbeitung andere Schwenkwinkel als 90° erforderlich sind, ist an der Be- und Entladeposition auf der der Bearbeitungsposition gegenüberliegenden Seite eine weitere Abschirmung angeordnet. Bei einer vorteilhaften Ausführung ist innen an der Abschirmung ein Andrückelement vorgesehen. Damit wird das Werkstück vor dem Spannen der Haltevorrichtung in eine definierte Position im Werkstückträger gepresst.

Im Folgenden wird die Erfindung an Hand eines Ausführungsbeispiels näher erläutert.
Fig. 1 zeigt eine Werkzeugmaschine in der Seitenansicht, teilweise geschnitten
Fig. 2 zeigt den Werkstückhalter unter beliebigem Schwenkwinkel
Fig. 3 zeigt die Abschirmung mit Andrückelement in vergrößerter Darstellung
Fig. 4 zeigt die Abschirmung nach Fig. 3 bei aktiviertem Andrückelement

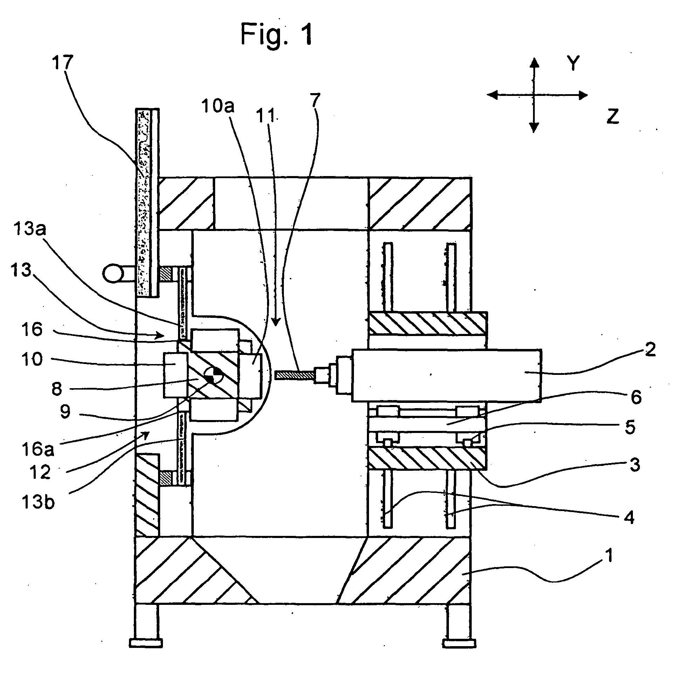

Bei der Werkzeugmaschine nach Fig. 1 sind zur besseren Übersichtlichkeit nicht erfindungswesentliche Teile, insbesondere Details des Antriebs, der Steuerung und des Gehäuses nicht dargestellt. Am Maschinengestell 1 ist die Bearbeitungseinheit 2 in den Richtungen der Hauptachsen X, Y, Z des Maschinenkoordinatensystems beweglich geführt. Dazu ist der Vertikalschlitten 3 an Führungen 4 am Maschinengestell 1 in Richtung der Y-Achse verschiebbar. Der Vertikalschlitten 3 trägt auf Führungen 5 den Horizontalschlitten 6. Am Horizontalschlitten 6 ist die Bearbeitungseinheit 2 in Richtung der Z-Achse beweglich. Die Bearbeitungseinheit 2 ist als Werkzeugspindel ausgeführt und dient zum Aufnehmen und Antreiben von Werkzeugen 7. Der Werkstückhalter 8 ist an den vier Längsseiten mit Werkstücken 10, 10a bestückt und am Maschinengestell 1 ortsfest gelagert. Er kann um die Schwenkachse 9 geschwenkt werden. Das Werkstück 10a befindet sich in der Bearbeitungsposition 11 um vom Werkzeug 7 bearbeitet zu werden. In der Be- und Entladeposition12 tauscht das Bedienpersonal bearbeitete Werkstücke 10 gegen unbearbeitete Werkstücke aus. Vorteilhafterweise kann der Austausch hauptzeitparallel, also während der Bearbeitung der Werkstücke 10, 10a erfolgen. Die Abschirmung 13, bestehend aus einem ersten und zweiten Abschirmteil 13a und 13b, schirmt die Be- und Entladeposition 12 gegen Späne und Kühlwasser ab. Die Abschirmung 13 ist in Fig. 1 in der Schließstellung dargestellt, wobei der erste Abschirmteil 13a von oben und der zweite Abschirmteil 13b von unten als vertikale Schiebetüren unmittelbar an Dichtflächen 16, 16a des Werkstückhalters 8 anliegen. Durch die ortsfeste Lagerung des Werkstückhalters, 8 am Maschinengestell 1 kann dieser kostengünstig hergestellt werden. Gleichzeitig wird durch die direkte Abschirmung unmittelbar am Werkstückträger das Be- und Entladen während der Bearbeitung ermöglicht.

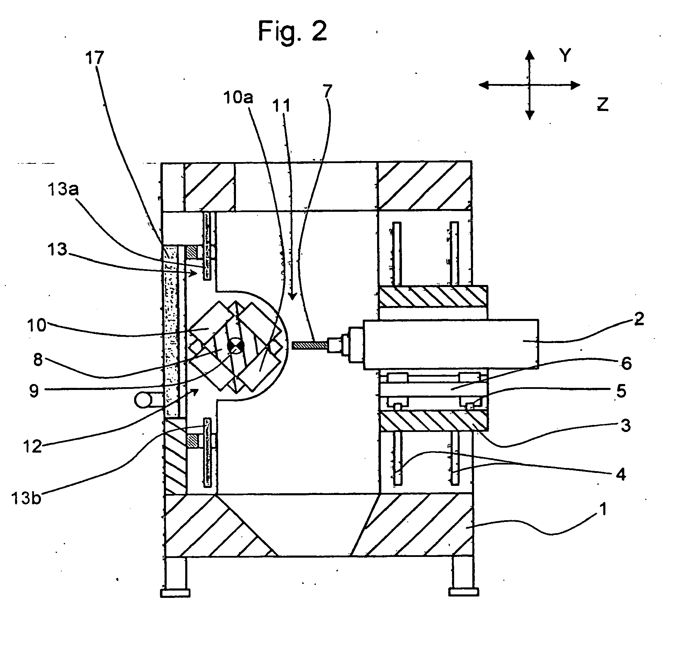

Um die Werkstücke 10, 10a unter beliebigem Winkel bearbeiten zu können, ist in einer vorteilhaften Ausführung nach Fig. 2 der Werkstückhalter 8 entsprechend um die Schwenkachse 9 gedreht worden. In diesem Fall ist die Abschirmung 13 nicht wirksam und eine dritte Abschirmung 17 verhindert das Austreten von Spänen und Kühlflüssigkeit.

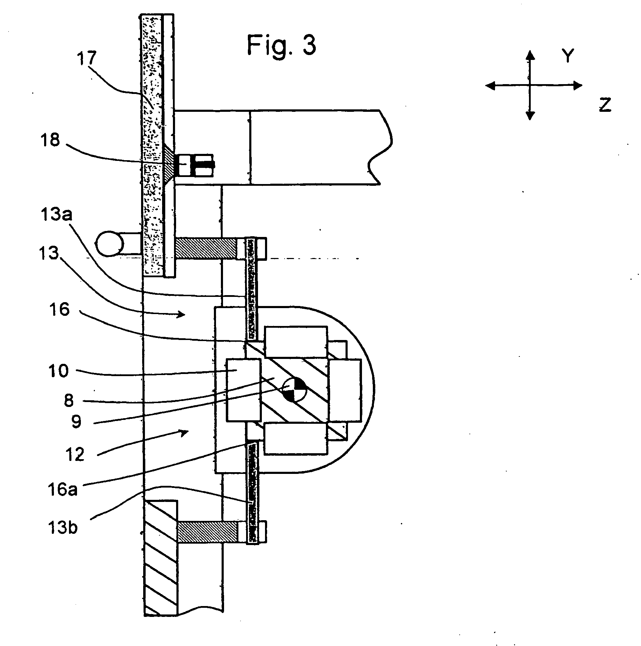

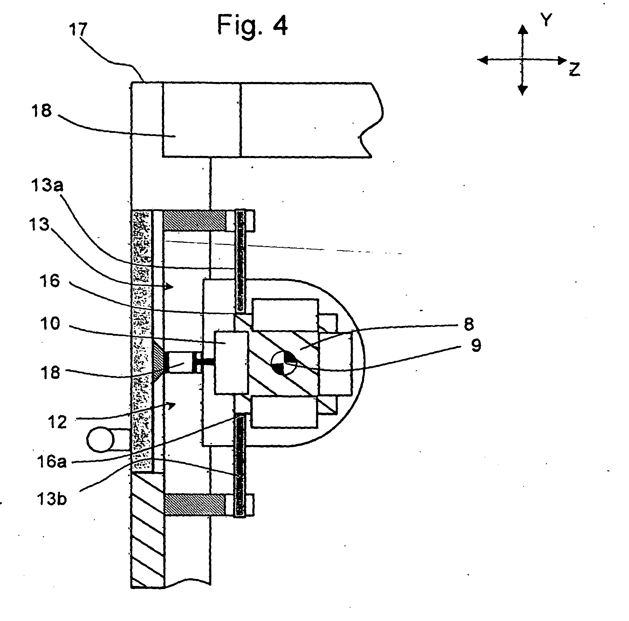

Fig. 3 zeigt den Werkstückhalter 8 mit der Abschirmung 13 in vergrößerter Darstellung. Das Werkstück 10 wurde vom Bedienpersonal lose in den Werkstückhalter 8 eingelegt. Anschließend wird, wie in Fig. 4 dargestellt, die dritte Abschirmung 17 geschlossen. An deren Innenseite ist das Andrückelement 18 angeordnet. Dieses ist als Zylinder ausgeführt und kann mit Fluiden aktiviert werden. Vor dem Spannen wird das Werkstück 10 vom Andrückelement 18 gegen eine Anlagefläche im Werkstückträger 8 gepresst.

### Bezugszeichenliste

- 1: Maschinengestell
- 2: Bearbeitungseinheit
- 3: Vertikalschlitten
- 4: Vertikale Führungen
- 5: Horizontale Führungen
- 6: Horizontalschlitten
- 7: Werkzeug
- 8: Werkstückhalter
- 9: Schwenkachse
- 10: 10a Werkstück
- 11: Bearbeitungsposition
- 12: Be- und Entladeposition
- 13: Abschirmung
- 13a: erster Abschirmteil
- 13b: zweiter Abschirmteil
- 16: 16a Dichtfläche
- 17: dritte Abschirmung
- 18: Andrückelement

## Patentansprüche

1. Werkzeugmaschine mit einem im Maschinengestell (1) um eine horizontale Schwenkachse (9) schwenkbar gelagerten Werkstückträger (8) zur Halterung von Werkstücken (10, 10a), wobei die Werkstücke (10, 10a), aus einer Be- und Entladeposition (12) in eine Bearbeitungsposition (11) schwenkbar sind, wobei die Werkstücke (10, 10a), aus unterschiedlichen Winkeln bearbeitbar sind, wobei die Be- und Entladeposition (12) zum Schutz vor Spänen und Kühlflüssigkeit durch eine Abschirmung (13) von der Bearbeitungsposition (11) getrennt ist und wobei die Abschirmung (13) aus einer Offen- in eine Schließstellung und umgekehrt bewegbar angeordnet ist, wobei am Werkstückträger (8) an mindestens zwei gegenüberliegenden Seiten Mittel zur Aufnahme von Werkstücken (10, 10a) vorgesehen sind,
**dadurch gekennzeichnet,**
**dass** in mindestens einer zur Schwenkachse (9) parallel verlaufenden Ebene mindestens eine Dichtfläche (16, 16a) am Werkstückträger (8) vorgesehen ist und dass die Abschirmung (13) in der Schließstellung mit dieser mindestens einen Dichtfläche (16, 16a) in Wirkverbindung steht.

2. Werkzeugmaschine nach Anspruch 1, **dadurch gekennzeichnet, dass** die Abschirmung (13) aus einem ersten (13a) und einem zweiten Abschirmteil (13b) besteht und dass der erste Abschirmteil (13a) in der Schließstellung mit einer Dichtfläche (16) oberhalb einer Ebene durch die Schwenkachse (9) und dass der zweite Abschirmteil (13b) mit einer Dichtfläche (16a) unterhalb der Ebene durch die Schwenkachse (9) in Wirkverbindung steht.

3. Werkzeugmaschine nach Anspruch 1 oder 2, **dadurch gekennzeichnet, dass** am Werkstückträger (8) an mindestens vier, jeweils paarweise gegenüberliegenden Seiten Mittel zur Aufnahme von Werkstücken (10, 10a) vorgesehen sind.

4. Werkzeugmaschine nach einem der Ansprüche 1 bis 3, **dadurch gekennzeichnet, dass** die Abschirmung (13) als Schiebetür ausgeführt ist.

5. Werkzeugmaschine nach einem der Ansprüche 1 bis 4, **dadurch gekennzeichnet, dass** an der Be- und Entladeposition (12) eine dritte Abschirmung (17) vorgesehen ist.

6. Werkzeugmaschine nach Anspruch 5, **dadurch gekennzeichnet, dass** die dritte Abschirmung (17) an der Be- und Entladeposition (12) auf der der Bearbeitungsposition (11) gegenüberliegenden Seite angeordnet ist.

7. Werkzeugmaschine nach Anspruch 4 oder 5, **dadurch gekennzeichnet, dass** an der dritten Abschirmung 17 ein Andrückelement 18 zum Anpressen von Werkstücken 10 gegen den Werkstückträger 8 vorgesehen ist.

## Claims

1. Machine tool having a work carrier (8) which is mounted in the machine frame (1) such as to be swivellable about a horizontal swivel axis (9) and is intended for mounting workpieces (10, 10a), wherein the workpieces (10, 10a) can be swivelled from a loading and unloading position (12) into a machining position (11), wherein the workpieces (10, 10a) can be machined from different angles, wherein the unloading and loading position (12) is separated from the machining position (11) by a screen (13) for protection against chips and cooling liquid, and wherein the screen (13) is arranged such as to be movable from an open position into a closed position, and vice versa, wherein means for accommodating workpieces (10, 10a) are provided on the work carrier (8) on at least two opposite sides, **characterized in that** at least one sealing surface (16, 16a) is provided on the work carrier (8) in at least one plane running parallel to the swivel axis (9), and **in that** the screen (13), in the closed position, is in operative connection with this at least one sealing surface (16, 16a).

2. Machine tool according to Claim 1, **characterized in that** the screen (13) consists of a first screening part (13a) and a second screening part (13b), and **in that** the first screening part (13a), in the closed position, is in operative connection with a sealing surface (16) above a plane through the swivel axis (9), and **in that** the second screening part (13b) is in operative connection with a sealing surface (16a) below the plane through the swivel axis (9).

3. Machine tool according to Claim 1 or 2, **characterized in that** means for accommodating workpieces (10, 10a) are provided on the work carrier (8) on at least four sides in each case opposite one another in pairs.

4. Machine tool according to one of Claims 1 to 3, **characterized in that** the screen (13) is designed as a sliding door.

5. Machine tool according to one of Claims 1 to 4, **characterized in that** a third screen (17) is provided at the loading and unloading position (12).

6. Machine tool according to Claim 5, **characterized in that** the third screen (17) at the loading and unloading position (12) is arranged on the side opposite the machining position (11).

7. Machine tool according to Claim 4 or 5, **characterized in that** a pressure element (18) for pressing workpieces (10) against the work carrier (8) is provided on the third screen (17).

## Revendications

1. Machine-outil comprenant un porte-pièce (8) monté de manière à pouvoir pivoter autour d'un axe de pivotement (9) horizontal dans un bâti de machine (1), pour la fixation de pièces (10, 10a), les pièces (10, 10a) pouvant pivoter d'une position de chargement et de déchargement (12) dans une position d'usinage (11), les pièces (10, 10a) pouvant être usinées depuis des angles différents, la position de chargement et de déchargement (12) étant séparée de la position d'usinage (11) par un écran (13) pour assurer la protection contre les copeaux et le liquide de refroidissement, et l'écran (13) étant disposé de manière à pouvoir être déplacé d'une position d'ouverture dans une position de fermeture et vice versa, des moyens pour recevoir les pièces (10, 10a) étant prévus sur au moins deux côtés opposés sur le porte-pièce (8),
**caractérisée en ce que**
dans au moins un plan s'étendant parallèlement à l'axe de pivotement (9), au moins une surface d'étanchéité (16, 16a) est prévue sur le porte-pièce (8), et **en ce que** l'écran (13) est en liaison fonctionnelle avec cette au moins une surface d'étanchéité (16, 16a) dans la position de fermeture.

2. Machine-outil selon la revendication 1, **caractérisée en ce que** l'écran (13) se compose d'une première (13a) et d'une deuxième (13b) partie d'écran, et **en ce que** la première partie d'écran (13a) est en liaison fonctionnelle avec une surface d'étanchéité (16) au-dessus d'un plan passant par l'axe de pivotement (9) dans la position de fermeture, et **en ce que** la deuxième partie d'écran (13b) est en liaison fonctionnelle avec une surface d'étanchéité (16b) en dessous du plan passant par l'axe de pivotement (9).

3. Machine-outil selon la revendication 1 ou 2, **caractérisée en ce que** l'on prévoit sur le porte-pièce (8), sur au moins quatre côtés opposés à chaque fois par paire, des moyens pour recevoir des pièces (10, 10a).

4. Machine-outil selon l'une quelconque des revendications 1 à 3, **caractérisée en ce que** l'écran (13) est réalisé sous forme de porte coulissante.

5. Machine-outil selon l'une quelconque des revendications 1 à 4, **caractérisée en ce que** l'on prévoit au niveau de la position de chargement et de déchargement (12) un troisième écran (17).

6. Machine-outil selon la revendication 5, **caractérisée en ce que** le troisième écran (17) est disposé au niveau de la position de chargement et de déchargement (12) sur le côté opposé à la position d'usinage (11).

7. Machine-outil selon la revendication 4 ou 5, **caractérisée en ce que** l'on prévoit sur le troisième écran (17) un élément de pression (18) pour presser des pièces (10) contre le porte-pièce (8).
